# EUROPÄISCHE PATENTSCHRIFT

(11) **EP 1 332 359 B1**
(45) Veröffentlichungstag und Bekanntmachung des Hinweises auf die Patenterteilung: **09.09.2009**
(21) Anmeldenummer: 00987018.9
(22) Anmeldetag: 24.10.2000
(51) Int. Cl.: G01N 29/28

(54) **PRÜFVORRICHTUNG FÜR DIE ULTRASCHALLPRÜFUNG VON STANGENMATERIAL**
TEST DEVICE FOR THE ULTRASONIC TESTING OF ROD MATERIAL
DISPOSITIF DE CONTROLE DESTINE AU CONTROLE PAR ULTRASONS DE BARRES

(43) Veröffentlichungstag der Anmeldung: 06.08.2003
(73) Patentinhaber: Agfa NDT GmbH, D-50354 Hürth (DE)
(72) Erfinder: PRAUSE, Reinhard, 53757 St. Augustin (DE)
(74) Vertreter: Bauer, Wulf
(86) Internationale Anmeldenummer: PCT/DE2000/003747
(87) Internationale Veröffentlichungsnummer: WO 2002/035226

(56) Entgegenhaltungen:
- US-A- 3 413 843
- PATENT ABSTRACTS OF JAPAN vol. 1998, no. 03, 27. Februar 1998 (1998-02-27) & JP 09 304358 A (SUMITOMO ELECTRIC IND LTD;DIA DENSHI OYO KK; SHIN NIPPON HIHAKAI KENSA), 28. November 1997 (1997-11-28)
- PATENT ABSTRACTS OF JAPAN vol. 011, no. 112 (P-565), 9. April 1987 (1987-04-09) & JP 61 260160 A (NIPPON KOKAN KK), 18. November 1986 (1986-11-18)

## Beschreibung

Die Erfindung bezieht sich auf eine Prüfvorrichtung für Ultraschall nach dem Oberbegriff des Patentanspruchs 1, wie sie aus der EP 0 985 905 A1 bekannt ist. Bei dieser vorbekannten Prüfvorrichtung weist das Gehäuse einen abgedichteten Eingang und Ausgang auf und ist vollständig mit einer Kopplungsflüssigkeit, in der Regel Wasser, gefüllt. Die Sensorflächen der Ultraschall-Prüfköpfe liegen frei und geschützt in Nischen, in diese münden parallel zur Gehäuseachse ausgerichtete Düsen, über die die Kopplungsflüssigkeit zugeführt wird, welche die Sensorflächen von Verunreinigungen und Luftblasen freihält.

Ähnliche Prüfvorrichtungen sind zudem auch in vielfältiger Ausführung bekannt, verwiesen wird hier nur beispielhaft auf das DE-Buch "Werkstoffprüfung mit Ultraschall", IV. Auflage, Autoren J. Krautkrämer und H. Krautkrämer.

Bei der Prüfung von Stangenmaterial geht es insbesondere um Innenfehlerprüfung und Prüfung auf Oberflächenfehler, aber auch auf Prüfung der Abmessungen. Für die Ultraschallprüfung muss bekanntlich eine Wasserstrecke zwischen dem Ultraschall-Prüfkopf und der zu prüfenden Stange geschaffen und aufrechterhalten werden. Hierfür sind mehrere Techniken bekannt, beispielsweise Prüfung in Tauchtechnik, Pfützentechnik oder mit einem geführten Wasserstrahl. Weiterhin gibt es geschlossene Wasserkammern mit Prüfstückdurchlauf, die häufig als SPS bezeichnet werden. Nach dem Einlauf des Prüfstücks in die geschlossene Wasserkammer dichtet das Prüfstück den Kammereinlauf und -auslauf ab. Die Wasserkammer wird mit Wasser gefüllt, um die Ankopplung zwischen Prüfkopf und Prüfstück zu erreichen. Die Prüfköpfe können dabei umfangssymmetrisch angeordnet werden. Nachteilig ist die relativ lange Zeit, bis die Kammer mit Wasser gefüllt ist, es verbleiben ungeprüfte Enden. Weiterhin stören Luftblasen im Ankoppelwasser die Prüfung.

Darüber hinaus sind auch Rotationsprüfvorrichtungen bekannt. Durch Rotation der gesamten Prüfkammer einschließlich der Prüfköpfe wird ein stabiler Wassermantel erzeugt. Durch ein- und auslaufseitig angeordnete Dichtsysteme ergibt sich ein im Wesentlichen rohrförmiger Wassermantel, durch den die Prüfstücke transportiert werden können. Diese Art der Prüftechnik hat eine hohe Prüfleistung, aufgrund der rotierenden Prüfkammer allerdings auch einen großen mechanischen Aufwand.

Unter Stangenmaterial wird im folgenden jegliche Art von länglichem Material verstanden, insbesondere runde Stahlstäbe, Stäbe mit unrunden Profilen, wie beispielsweise Vierkant- und Sechskantstäbe, Flachmaterial in Form von Stangen, aber auch Rohre, sowie Walzgut, extrudierte Profile.

Die Erfindung hat es sich zur Aufgabe gemacht, eine Vorrichtung zur Ultraschallprüfung von Stangenmaterial anzugeben, die die Vorteile der o. g. Rotationsprüfvorrichtung aufweist und die die Prüfvorrichtung der eingangs genannten Art dahingehend verbessert, dass störende Luftblasen einen geringeren Einfluß auf das Messergebnis haben.

Diese Aufgabe wird gelöst durch eine Prüfvorrichtung für die Ultraschallprüfung mit den Merkmalen des Patentanspruchs 1.

Durch die im wesentlichen tangential angeordnete und in den Innenraum des Behälters mündende Düse wird Wasser eingeleitet. Aufgrund dieser Zuleitung und der daraus resultierenden Umlaufbewegung des Wassers entsteht ein im wesentlichen rohrförmiger Wassermantel. Störende Luftblasen bleiben nicht stationär, sondern werden mitgerissen und sind daher für die Prüfung unbeachtlich. Eine Rotation des Behälters erfolgt nicht, vielmehr ist der Behälter stationär. Es rotiert aber der im Behälter befindliche Wassermantel. Durch die Rotation des Wassermantels ist dieser stabil, sofort nach dem Einlauf eines Prüfstücks in Form einer Stange kann die Prüfung erfolgen.

Ebenso kann der rotierende Wassermantel durch das Schaufelrad erzeugt werden. Unter Schaufelrad wird eine beliebige Anordnung mehr oder weniger radial angestellter Schaufeln verstanden, die in der Lage ist, das Wasser innerhalb des Behälters so zu bewegen, dass der umlaufende Wassermantel erreicht wird. Vorzugsweise ist das Schaufelrad an Stirnseiten angeordnet. Es kann mit den Stirnseiten ausgetauscht werden. Die Schaufelräder befinden sich bevorzugt außerhalb des Ultraschallweges des mindestens einen Ultraschall-Prüfkopfes. Es ist aber auch möglich, dass die Ultraschall-Prüfköpfe durch den Bewegungsbereich der Schaufeln eines Schaufelrades hindurch strahlen. Sie werden dann so mit der Bewegung des Schaufelrades abgestimmt, dass nur dann eine Messung erfolgt, wenn sich kein Schaufelrad im Ultraschallweg befindet.

Der Behälter kann sehr kurz aufgebaut werden. Ungeprüfte Enden bleiben klein. Es ist aber auch möglich, die Endprüfung im Behälter durchzuführen, wenn sich ein Endbereich einer zu prüfenden Stange im Innenraum befindet.

Es ist mindestens ein Ultraschall-Prüfkopf am Behälter angeordnet, vorzugsweise sind sehr viele Prüfköpfe vorgesehen. Sie können in jeder beliebigen Lage am Umfang angeordnet werden. Ebenso können Prüfkopfgruppen (CLUSTER) oder Gruppenstrahler (Arrays) eingesetzt werden. Sie können also radial ausgerichtet sein, aber auch schräg in beliebiger Winkelausrichtung innerhalb der möglichen Einschallwinkel angeordnet sein, beispielsweise in der Radialebene schräg oder in einem Winkel ungleich 90 Grad zur Zylinderachse.

Die Ultraschall-Prüfköpfe haben eine aktive Fläche, die vorzugsweise von einem Vorlaufkörper aus geeignetem Festkörpermaterial gebildet ist. Dieser Vorlaufkörper kann so geformt werden, dass er bündig mit dem Innenmantel des Behälters abschließt, also den Umlauf des Wassers innerhalb des rohrförmigen Behälters nicht stört.

Die zu prüfenden Teile werden im wesentlichen konzentrisch zur Zylinderachse durch den Innenraum hindurchgeführt. Es ist aber auch möglich, stationäre Stangen oder Profile zu prüfen, in dem der Behälter aus zwei in einer Axsialebene zu verbindenden Halbschalen aufgebaut wird, die um eine stationäre Stange, beispielsweise eine Rohrleitung, herumgelegt werden und axsial verschoben werden können, um die Prüfung durchzuführen.

Für das Stangenmaterial sind Führungsmittel an den beiden Stirnflächen des rohrförmigen Behälters vorgesehen, sie sind für eine Führung der zu prüfenden Stange ausgelegt, so dass die zu prüfende Stange im wesentlichen konzentrisch zur Zylinderachse angeordnet ist. Vorzugsweise sind geeignete Dichtmittel vorhanden, um den Wasseraustritt im Bereich der Stirnflächen gering zu halten. Es kann aber auch ganz bewußt der Wasseraustritt im Bereich der Stirnflächen erfolgen, wodurch einerseits die Dichtungen sehr einfach werden oder gar entfallen können und andererseits ein separater Auslaß nicht benötigt wird. Es kann aber auch ein separater Auslaß vorgesehen sein, der entsprechend der mindestens einen Düse für Wasserzulauf ausgebildet ist und tangential das Wasser wieder austreten läßt, und zwar in Umlaufrichtung.

Für die Abdichtung im Bereich der Stirnseiten haben sich auswechselbare Endringe besonders bewährt, die an beiden Stirnseiten des Behälters einfach lösbar befestigt werden können. Es gibt sie in unterschiedlichen Ausführungen, also mit unterschiedlichen zentralen Öffnungen, jeweils angepaßt auf das zu prüfende Stangenmaterial, nämlich dessen Profil.

Im Bereich der Stirnseiten, dort wo die Endringe angeordnet sind, ist ein Wasseraustritt möglich, eventuell sogar gewollt. Unterhalb der Stirnseiten werden daher Wasserauffangbecken angeordnet, die das austretende Wasser sammeln.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung nun näher erläutert werden. In der Zeichnung zeigen:
- Fig. 1:: eine Prüfvorrichtung nach der Erfindung in einem axialen Längsschnitt und mit einer zu prüfenden Rundstange,
- Fig. 2:: ein Schnittbild durch die Vorrichtung gemäß Figur 1 entsprechend der Schnittlinie II-II,
- Fig. 3:: eine Darstellung als Axialschnittbild einer Prüfvorrichtung mit konischem Innenmantel,
- Fig. 4:: eine axiale Seitenansicht einer aufklappbaren Prüfvorrichtung,
- Fig. 5:: eine axiale Seitenansicht einer Führungsbuchse, die aus zwei halbringförmigen Teilstücken zusammensetzbar ist,
- Fig. 6:: eine andere Ausführung einer Prüfvorrichtung in einer Darstellung entsprechend Figur 1 mit einem zu prüfenden Vierkant und
- Fig. 7:: ein Schnittbild ähnlich der Darstellung gemäss Figur 2 für eine Ausführung ähnlich Figur 6.

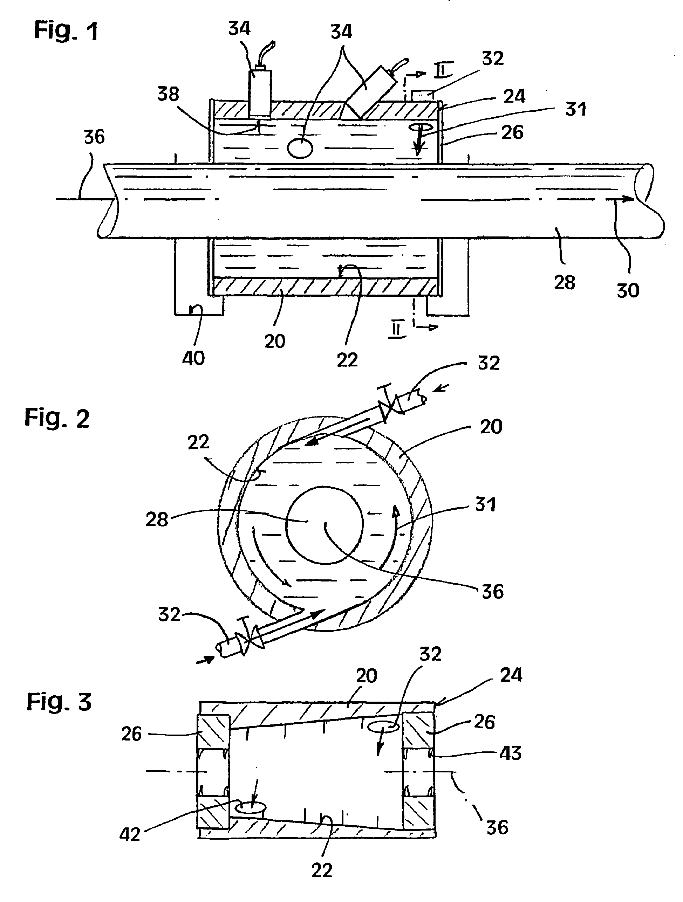

Figur 1 zeigt eine Prüfvorrichtung für die Ultraschallprüfung von Stangenmaterial nach der Erfindung. Die Vorrichtung hat einen rohrförmigen Behälter 20, der einen im wesentlichen zylindrischen Innenraum 22 hat. Er hat weiterhin zwei Stirnseiten 24, die durch jeweils eine Führungsbuchse 26 in Ringform so abgeschlossen sind, dass eine Durchlaßöffnung für das zu prüfende Stangenmaterial freibleibt.

Als zu prüfendes Stangenmaterial ist in der Ausführung nach Figur 1 und Figur 2 eine Stange 28 in Form eines Rundstabes vorgesehen, der dicht in Abdichtmitteln der beiden Führungsbuchsen 26 angeordnet und durch diese Führungsbuchsen geführt ist. Er kann in Richtung des Pfeils 30 transportiert werden.

In den Innenraum 22 mündet eine Düse 32 für Wasserzulauf. 180 Grad versetzt hierzu ist noch eine weitere, richtungsgleiche Düse vorgesehen, wie Figur 2 zeigt. Diese Düsen 32 sind so tangential zum Innenmantel angeordnet, dass sie das Wasser im wesentlichen tangential einleiten. Es wird dadurch ein rotierender Wassermantel in Rohrform gebildet, wie er aus Figur 2 ersichtlich ist. Er umläuft im Sinne der Pfeile 31 die zu prüfende Stange 28.

Für die eigentliche Ultraschallprüfung sind am Behälter 20 drei Prüfköpfe 34 angeordnet, die hier nur beispielhaft für die möglichen Prüfköpfe stehen. Ein Prüfkopf schallt auf einer Radialen ein, ein anderer in einem Winkel zur Längsachse 36, ein dritter auf einer Radialebene, jedoch nicht durch das Zentrum, also nicht durch die Längsachse 36. Die Ultraschall-Prüfköpfe 34 haben jeweils eine aktive Fläche 38, die in den Innenraum ragt und mit dem Innenmantel möglichst bündig und formgleich verläuft. Hierzu hat beispielsweise der Winkelprüfkopf 34 einen im wesentlichen keilförmigen Vorlaufkörper.

Die Prüfköpfe sind für Impuls-Echo-Betrieb ausgelegt, ebenfalls die zugehörige, hier nicht näher dargestellt Prüfelektronik, die an sich bekannt ist und dem Stand der Technik entspricht. Es sind aber auch andere Prüfverfahren möglich. Auf das eingangs genannte Buch wird insoweit verwiesen.

Im Ausführungsbeispiel nach den Figuren 1 und 2 tritt das für die Ankopplung verwendete Wasser im Bereich der Führungsbuchsen 26, insbesondere zwischen den Führungsbuchsen 26 und der Stange 28, aus und wird in Auffangbecken 40 gesammelt und von dort abgeführt.

Die radiale Dicke des Wassermantels zwischen Stange 28 und Innenmantel 22 beträgt mindestens 5 Millimeter, vorzugsweise liegt sie bei einigen Zentimetern. Die Strömungsgeschwindigkeit in Umlaufrichtung wird so gewählt, dass Blasen aller Art mitgerissen werden, jedenfalls sich nicht an irgendeiner Stelle festsetzen können.

Die Prüfköpfe 34 können umfangssymmetrisch am Behälter 20 angeordnet werden. Die Anordnung ist von der Konstruktion der Prüfvorrichtung unabhängig, sie kann den jeweiligen Prüferfordernissen angepaßt werden.

Der Behälter 20 kann recht kurz ausgeführt werden, es genügt eine axiale Länge, die ausreicht, um alle Prüfköpfe für die jeweilige Prüfaufgabe unterzubringen.

Der mechanische Aufbau der Prüfvorrichtung ist recht einfach, es gibt keine rotierenden Teile, es rotiert lediglich der Wassermantel.

In Figur 3 ist ein Behälter 20 gezeigt, der einen leicht konisch ausgebildeten Innenraum 22 hat. Das Wasser wird in diesem Fall durch eine Düse 32 eingeleitet. Sie befindet sich im Bereich größeren Durchmessers. Das Wasser verläßt den Innenraum 22 wieder an einer ähnlich ausgebildeten und in gleicher Richtung angeordneten Auslaßdüse 42. Unabhängig hiervon sind am Innenmantel 22 schraubenförmig angeordnete, eine geringe Höhe von beispielsweise 5 bis 10 mm aufweisende Stege als Leitbleche 44 vorgesehen, die schraubenlinienförmig umlaufen. Durch sie wird der Wassermantel vom Einlaß zum Auslaß schraubenlinienförmig geleitet.

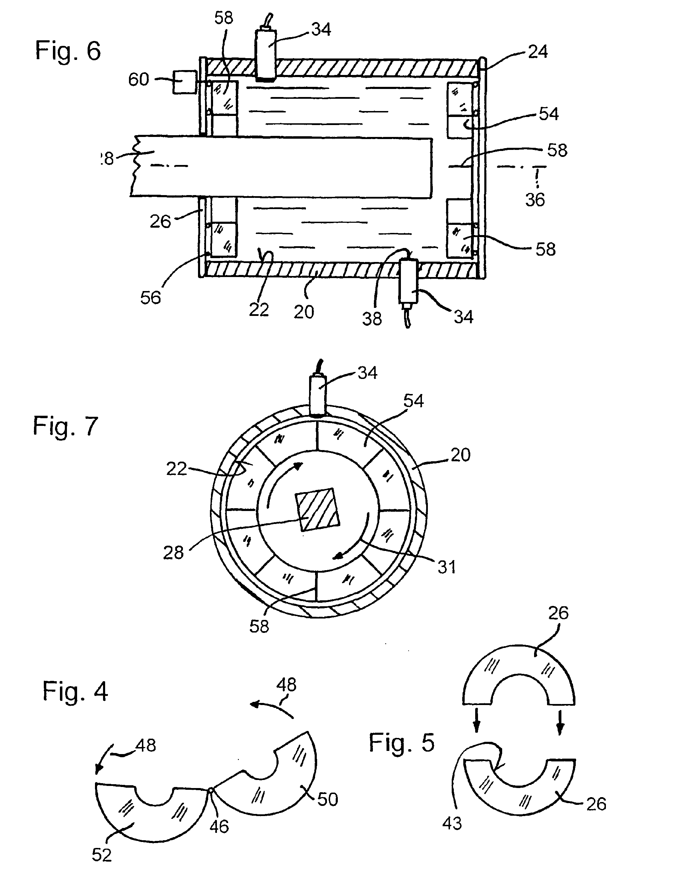

Figur 4 zeigt einen Behälter, der in einer durch die Längsachse 36 verlaufenden Ebene geteilt ist zu zwei Halbschalen, welche durch ein Gelenk 46 mit parallel zu Längsachse 36 verlaufender Gelenkachse miteinander so verbunden sind, dass sie zu einem Behälter gemäß Figur 1 und 2 zusammengeklappt werden können. Entsprechende Dichtmittel sind an den beiden Halbschalen 50, 52 vorgesehen. Dieser Behälter 20 kann mit entsprechenden Führungsbuchsen 26 für die Prüfung stationärer, also bereits in einer Anlage befindlicher Stangen 28 eingesetzt werden, beispielsweise von Rohrleitungen bei chemischen Anlagen oder in Kernkraftwerken.

Die Pfeile 48 zeigen, wie die beiden Halbschalen 50, 52 zu einem geschlossenen Behälter zusammengeklappt werden können.

Schließlich ist in Figur 5 eine Führungsbuchse 26 gezeigt, die hier aus zwei Segmenten zusammengesetzt ist. Dadurch kann die Führungsbuchse 26 auf Stangen aufgesetzt werden, ohne deren Ende einfädeln zu müssen bzw. auf stationäre, eingebaute Stangen aufgesetzt werden, wie dies für die Ausführung nach Figur 4 soeben beschrieben wurde.

Zur Abdichtung gegenüber den Stangen 28 sind an den Führungsbuchsen 26 Dichtungen 43 vorgesehen, siehe Figur 3. Die Führungsbuchsen 26 können in geeignete Ausnehmungen bzw. Aufnahmen an den Stirnseiten 24 des Behälters 20 dicht und leicht lösbar eingesetzt werden.

Als Führungsbuchsen 26 haben sich auch solche mit verstellbaren Öffnungen als günstig erwiesen, z.B. mit einer Irisblende, wie sie ähnlich aus Fotoapparaten bekannt ist. Insbesondere bei runden Prüfstücken ist es vorteilhaft, das Prüfstück während seines Transports durch die Prüfvorrichtung zu drehen. Dadurch läßt sich die örtliche Auflösung verbessern. Eine Drehvorrichtung greift am Prüfstück an und dreht dieses gegenüber der Prüfvorrichtung. Es ist auch möglich, die Prüfvorrichtung hin- und herzuschwenken, z.B. im Winkel 360° hin- und herzudrehen um die Längsachse 30. Die Prüfvorrichtung nach der Erfindung eignet sich für solche Anwendungen, bei denen ein einmal im normalen Prüfdurchlauf gefundener Fehler oder eine Abweichung anschließend näher untersucht wird, indem das Prüfstück so hin- und zurückbewegt wird bzw. gedreht wird, dass Prüfstück und/oder Prüfvorrichtung um den Ort des gefundenen Fehlers in einem speziellen Prüfdurchlauf bewegt wird und der Fehler so besser und im einzelnen gezielt ausgemessen und erfaßt werden kann.

In der Ausführung nach den Figuren 6 und 7 wird das im zylindrischen Innenraum 22 des rohrförmigen Behälters 20 befindliche Wasser (oder eine andere Flüssigkeit) durch zwei Schaufelräder 54 in Umlauf entsprechend der Pfeile 31 (Figur 7) gebracht. Die Schaufelräder 54 sind an den Stirnseiten angeordnet und mit diesen austauschbar. Hierzu sind Lager 56 vorgesehen, die die Schaufelräder 54 drehbar aufnehmen. Die Schaufelräder 54 haben eine Anzahl von einzelnen Schaufeln 58, die im wesentlichen auf einer Durchmesserebene liegen. Zwischen den einzelnen Schaufeln 58 ist sehr viel Freiraum, sodass eine Ultraschallmessung zwischen zwei Schaufeln 58 hindurch erfolgen kann, falls die Schaufelräder 54 nicht, wie beispielsweise in Figur 6 dargestellt, sich völlig außerhalb des Bewegungsbereiches der Schaufelräder 54 befinden.

Die Schaufelräder 54 werden durch einen außen angeordneten Motor 60 angetrieben. Hierzu durchgreift eine Motorachse das Seitenteil und endet in einem Ritzel. Das Ritzel greift in einen Zahnkranz ein, der mit dem Schaufelrad 54 zusammenhängt. Andere Antriebsvorrichtungen für das Schaufelrad 54 sind möglich. Es ist auch möglich, die Schaufelräder 54 am Gehäuse 20 anzuordnen bzw. zu lagern. Die gezeigten Schaufeln 58 sind mit einer Ringscheibe verbunden, von der sie axial in Gegenrichtung zum Lager 56 wegstehen. Der Motor 60 kann auch im Gehäuse angeordnet sein. Es werden so viele Schaufeln 58 und so viele Schaufelräder 54 vorgesehen, dass sich der gewünschte Wassermantel ausbildet.

In Figur 6 ist die Prüfung eines Endstücks einer Stange 28 gezeigt, die hier im wesentlichen quadratischen Querschnitt hat (siehe Figur 7). Die rechte Stirnseite ist geschlossen. Sie kann ebenso wie die linke Stirnseite mit einem Durchlass für die Stange 28 versehen sein.

Es ist möglich, die Wasserbewegung einerseits durch tangentiales Einleiten von Wasser, siehe Figuren 1 und 2, und andererseits durch Antrieb mittels eines Schaufelrades 54 zu kombinieren.

## Patentansprüche

1. Prüfvorrichtung für die Ultraschallprüfung von Stangenmaterial a) mit einem stationären Behälter (20), der einen im wesentlichen zylindrischen Innenraum (22) ausbildet, welcher einen größeren Durchmesser hat als das Stangenmaterial und eine Zylinderachse (36) aufweist und b) mit mindestens einem Ultraschall-Prüfkopf (34), der mit dem Behälter (20) verbunden ist und eine aktive Fläche (38) hat, die vom zylindrischen Innenraum (22) aus frei zugänglich ist, **gekennzeichnet durch** eine Einrichtung zur Erzeugung eines umlaufenden Wassermantels, die einen Auslass (42) und mindestens eine Düse (32) für einen Wasserzulauf, die im Wesentlichen tangential zu einem Innenmantel des Innenraums (22) angeordnet ist und in ihn mündet und/oder ein um die Zylinderachse (36) rotierbar angeordnetes Schaufelrad (54), dem ein Drehantrieb (60) zugeordnet ist, aufweist.

2. Prüfvorrichtung nach Anspruch 1, **dadurch gekennzeichnet, dass** der mindestens eine Prüfkopf (34) so angeordnet ist, dass seine aktive Fläche (38) bündig ist mit dem Innenmantel (22) des Behälters (20).

3. Prüfvorrichtung nach Anspruch 1, **dadurch gekennzeichnet, dass** Führungsmittel für das Stangenmaterial vorgesehen sind, die für eine Führung einer zu prüfenden Stange (28) im Wesentlichen konzentrisch zur Zylinderachse (36) ausgelegt sind.

4. Prüfvorrichtung nach Anspruch 1, **dadurch gekennzeichnet, dass** End ringe vorgesehen sind, die auswechselbar an den beiden Stirnseiten (24) des Behälters (20) befestigbar sind und eine dem zu prüfenden Stangen material angepasste Öffnung aufweisen.

5. Prüfvorrichtung nach Anspruch 1, **dadurch gekennzeichnet, dass** ein Wasserauffangbecken (40) unterhalb mindestens einer Stirnseite (24) des Behälters (20) vorgesehen ist, das aus dieser Stirnseite (24) ausdringendes Wasser auffängt.

6. Prüfvorrichtung nach Anspruch 1, **dadurch gekennzeichnet, dass** der Auslass (42) im Behälter (20) vorgesehen ist und dass der Auslass (42) im Wesentlichen tangential zum Innenmantel (22) und in Gegenrichtung zu der mindestens einen Düse (32) für Wasserzulauf angeordnet ist.

7. Prüfvorrichtung nach Anspruch 1, **dadurch gekennzeichnet, dass** am Innenmantel (22) schraubenlinig verlaufende Leitbleche (44) vorgesehen sind.

8. Prüfvorrichtung nach Anspruch 1, **dadurch gekennzeichnet, dass** sich der Innenmantel (22) von einer Stirnseite (24) zur anderen Stirnseite (24) hin verjüngt, insbesondere konisch verjüngt.

9. Prüfvorrichtung nach Anspruch 1, **dadurch gekennzeichnet, dass** der Auslass (42) im Behälter (20) oder im Bereich der Stirnflächen vorgesehen ist.

## Claims

1. A testing device for the ultrasonic inspection of barstock a) with a stationary tank (20) defining a substantially cylindrical interior space (22) that has a larger diameter than the barstock and is provided with a cylinder's axis (36), b) with at least one ultrasonic probe (34) that is connected to the tank (20) and has an active face (38) which is freely accessible from the cylindrical interior space (22), **characterized by** an equipment for producing a surrounding water jacket, said equipment being provided with either an outlet (42) and at least one nozzle (32) for a water supply which is disposed substantially tangential with an inner lining of the interior space (22) into which it discharges and/or a blade wheel (54) that is disposed so as to rotate about the cylinder's axis (36) and that is assigned a rotary drive mechanism (60).

2. The testing device according to claim 1, **characterized in that** the at least one probe (34) is disposed in such a manner that the active face (38) thereof is made flush with the inner lining (22) of the tank (20).

3. The testing device according to claim 1, **characterized in that** guide means for the barstock are provided, said guide means being devised for guiding a bar (28) to be tested in such a manner that it is substantially concentric with the cylinder's axis (36).

4. The testing device according to claim 1, **characterized in that** end rings are provided that can be replaceably fastened to the two front faces (24) of the tank (20) and that have an opening that is adapted to the barstock to be tested.

5. The testing device according to claim 1, **characterized in that** a collecting basin (40) is provided beneath at least one front face (24) of the tank (20), said basin collecting water exiting said front face (24).

6. The testing device according to claim 1, **characterized in that** the outlet (42) is provided on the tank (20), and that the outlet (42) is disposed in substantially tangential contact with the inner lining (22) and in the direction counter to the at least one nozzle (32) for water supply.

7. The testing device according to claim 1, **characterized in that** helically oriented guiding plates (44) are provided on the inner lining (22).

8. The testing device according to claim 1, **characterized in that** the inner lining (22) tapers, more specifically conically tapers, from one front face (24) toward the other front face (24).

9. The testing device according to claim 1, **characterized in that** the outlet (42) is provided on the tank (20) or in the area of the front faces.

## Revendications

1. Dispositif de contrôle pour le contrôle par ultrasons de barres, comprenant a) un récipient stationnaire (20) qui forme un volume intérieur (22) pour l'essentiel cylindrique qui a un diamètre supérieur à celui des barres et présente un axe de cylindre (36), et b) au moins un palpeur à ultrasons (34) qui est relié au récipient (20) et présente une surface active (38) qui est librement accessible depuis ledit volume intérieur cylindrique (22), **caractérisé par** un dispositif destiné à générer une chemise d'eau rotative, qui présente une sortie (42) et au moins une buse (32) pour une amenée d'eau laquelle est disposée pour l'essentiel tangentiellement par rapport à une surface latérale intérieure du volume intérieur (22) et débouche dans celui-ci, et/ou une roue à aubes (54) qui est disposée à rotation autour de l'axe de cylindre (36) et à laquelle est associé un mécanisme d'entraînement en rotation (60).

2. Dispositif de contrôle selon la revendication 1, **caractérisé par le fait que** ledit au moins un palpeur (34) est disposé de telle sorte que sa surface active (38) est à fleur de la surface latérale intérieure (22) du récipient (20).

3. Dispositif de contrôle selon la revendication 1, **caractérisé par le fait que** l'on prévoit des moyens de guidage pour lesdites barres, qui sont conçus pour guider une barre à contrôler (28) pour l'essentiel concentriquement à l'axe de cylindre (36).

4. Dispositif de contrôle selon la revendication 1, **caractérisé par le fait que** l'on prévoit des anneaux d'extrémité qui peuvent être fixés d'une manière échangeable sur les deux faces frontales (24) du récipient (20) et qui présentent une ouverture adaptée aux barres à contrôler.

5. Dispositif de contrôle selon la revendication 1, **caractérisé par le fait que** l'on prévoit un bassin de réception d'eau (40) au-dessous d'au moins une face frontale (24) du récipient (20), qui reçoit l'eau sortant de cette face frontale (24).

6. Dispositif de contrôle selon la revendication 1, **caractérisé par le fait que** ladite sortie (42) est prévue dans le récipient (20) et que la sortie (42) est agencée pour l'essentiel tangentiellement à la surface latérale intérieure (22) et dans le sens opposé à ladite au moins une buse (32) pour l'amenée d'eau.

7. Dispositif de contrôle selon la revendication 1, **caractérisé par le fait que** sur la surface latérale intérieure (22) sont prévues des tôles de guidage (44) s'étendant en hélice.

8. Dispositif de contrôle selon la revendication 1, **caractérisé par le fait que** la surface latérale intérieure (22) se rétrécit d'une face frontale (24) à l'autre face frontale (24), en particulier se rétrécit de façon conique.

9. Dispositif de contrôle selon la revendication 1, **caractérisé par le fait que** ladite sortie (42) est prévue dans le récipient (20) ou au niveau des faces frontales.
